# EUROPEAN PATENT SPECIFICATION

(11) **EP 0 770 525 B1**
(45) Date of publication and mention of the grant of the patent: **05.04.2000**
(21) Application number: 96307622.9
(22) Date of filing: 21.10.1996
(51) Int. Cl.: B60S 1/34

(54) **Drive arm assembly for wiper blade**
Antriebsarme für Scheibenwischer
Bras d'entraînement pour essuie-glace

(30) Priority: 26.10.1995 AU PN620195
(43) Date of publication of application: 02.05.1997
(73) Proprietor: TRICO PRODUCTS CORPORATION, Buffalo, NY 14203-1298 (US)
(72) Inventor: Smith, Peter Munroe, Mt. Waverley, Victoria 3149 (AU)
(74) Representative: James, Michael John Gwynne

(56) References cited:
- DE-A- 3 810 017
- GB-A- 2 253 135

## Description

The present invention relates to improvements in drive arm assemblies for wiper blade.

Conventionally, wiper blade drive arm assemblies comprise a drive head adapted to be secured to a drive system including a drive motor for oscillating motion. The drive arm assembly normally includes a drive arm member pivoted to the drive head with the support harness for the wiper blade pivoted to an outer end of the drive arm member. A spring arrangement is located between the drive head and the drive arm member so as to provide a downward force on the wiper support harness to urge the wiper blade towards the windscreen when in use. The spring arrangement is also configured to enable the drive arm member to be pivoted away from the windscreen to be held in a locked back position by the spring arrangement when in an over centre position, whereby the windscreen can be cleaned or perhaps the wiper blades can be changed.

Commonly the pivot connection of the drive arm member to the drive head is created by providing a pair of flanges extending from side walls of the drive arm member rearwardly to be located outwardly of and adjacent side walls of the drive head, with a pivot pin being located through the pair of flanges of the drive arm member and the side walls of the drive head. A stop to prevent movements of the drive arm member beyond a predetermined locked back position is provided by a top wall edge of the drive arm member which extends between the pair of pivot mounting flanges and is arranged to engage a top wall of the drive head.

Whilst arrangements of this general type do work satisfactorily, they unfortunately also have a practical disadvantage in that when the drive arm member is moved toward the locked back position, it is possible to damage or crack the paint work on the drive head by the aforesaid engagement of the rear top edge on the top surface of the drive head. This can provide an unsightly appearance but also can promote premature corrosion and possible failure of the drive head.

The objective therefore of the present invention is to provide an improved drive arm assembly for a wiper blade which will substantially overcome the difficulties discussed above with existing or conventional drive arm assemblies.

Patent GB 2205033 A provides a construction wherein a pivot connection between two pivotally linked members, being respectively a drive head and a drive arm of a wiper drive arm assembly linked by a pivot, said pivot connection comprising laterally disposed side wall portions on one of said members arranged to be pivotally, connected about inset sides of the other of said members, each inset side terminating in a projecting edge and stop means acting between said members in one or both lateral side zones to limit relative pivoting movement between said members from an aligned condition to an extent such that an end edge of a top wall of said drive arm, located and extending between said laterally disposed side wall portions, does not contact a central zone of a top wall of the drive head in a locked back position of the drive arm.

In accordance with this invention the stop means comprises a first stop step portion located at the top of said projecting edge and a second stop step portion located at the end of the top face of said one member, the two stop step portions being located to either side of the said pivot when the members are in said aligned condition.

In the preferred arrangement the side wall portions are provided on said drive arm. The pivot pin extending through the laterally disposed side wall portions links the drive head to the drive arm.

By arrangements of the aforementioned type, the required functional performance of the wiper drive assembly is achieved but damage and visible unsightly appearance to the top surface of the drive head is prevented.

The invention may be performed in various ways and a preferred embodiment will now be described, by way of example, with reference to the accompanying drawings, in which:-
Figures 1A and 1B are respectively a side section view and a top plan view of a wiper drive assembly according to the prior art;
Figure 2 is a top plan view of a wiper drive assembly according to the present invention;
Figure 3 is an enlargement in plan view of a detail of the pivot area marked III in Figure 2;
Figure 4 is a side elevation view of the wiper drive assembly shown in Figure 2;
Figure 5 is an enlargement in side view of a detail of the pivot area marked V in Figure 4;
Figure 6 is a side elevation view similar to Figure 4 showing the wiper drive arm in a locked back position; and
Figure 7 is an enlargement of the pivot area marked VII in Figure 6.

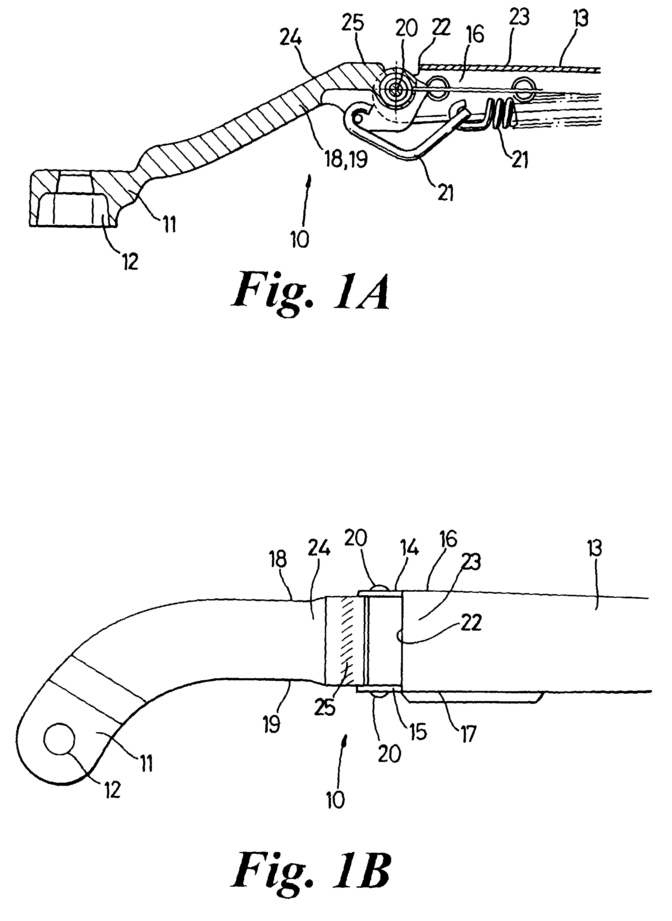

Referring first to Figures 1A and 1B, a conventional wiper drive arm assembly 10 is illustrated comprising a drive head 11 adapted at 12 to be connected to a drive system (not shown). A drive arm 13 has a pair of rearwardly extending flanges 14, 15 extending from side walls 16, 17 of the drive arm 13 such that the flanges are located outwardly of side walls 18, 19 of the drive head 11 and are connected there by a pivot pin 20. A spring assembly 21 acts between the head 11, and the drive arm 13 either to provide a force urging the free end (not shown) of the arm 13 towards a windscreen (in use) or alternatively to provide a hold or locked back force when the arm 13 is pivoted counter clockwise (Figure 1A) about the pivot pin 20. The locked back position occurs when the rear edge 22 of the top surface 23 of the drive arm 13 engages the top surface 24 of the drive head 11 in the region identified by numeral 25. As discussed above, it is this contact that causes either an unsightly appearance or damage to the drive head.

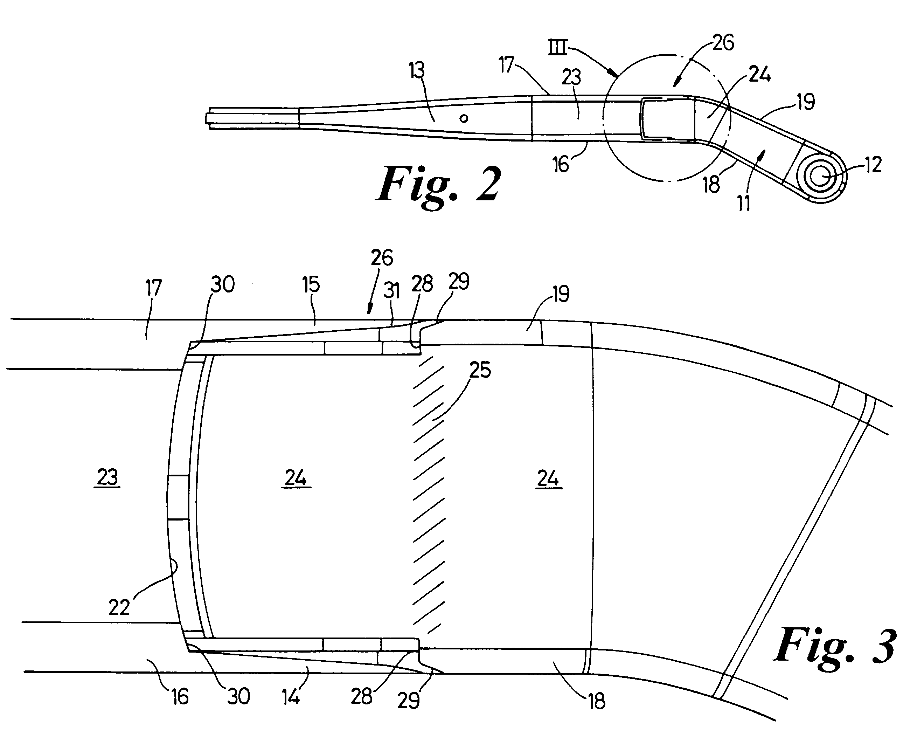

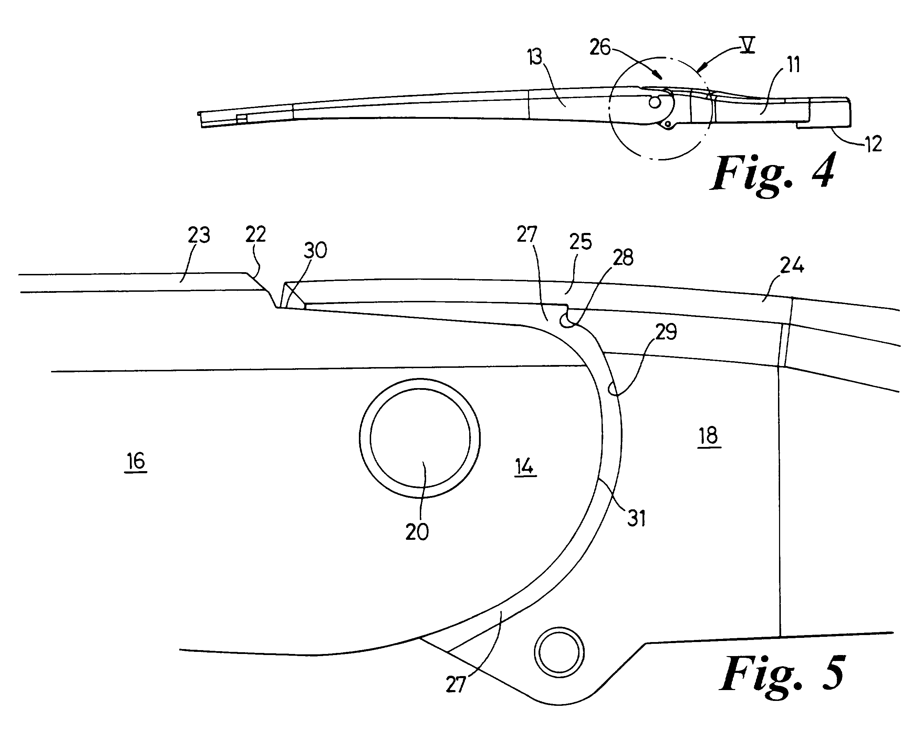

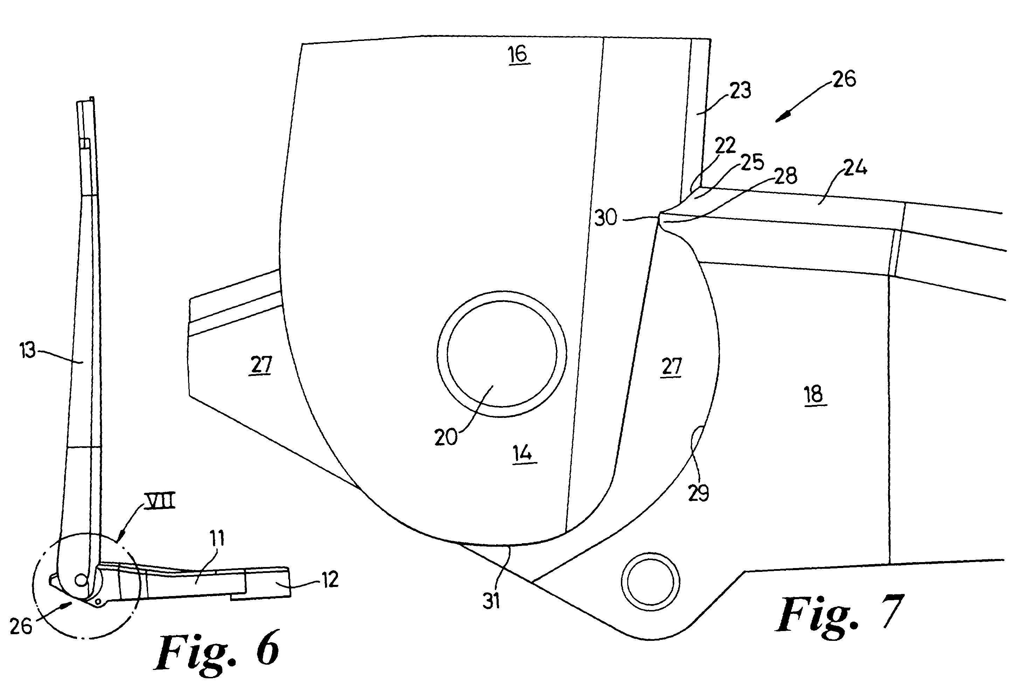

Referring now to Figures 2 to 7, it should be noted that the function and components of the assembly described are generally as discussed above with reference to Figures 1A and 1B except for the specific matters discussed hereinafter. In this embodiment of the present invention the pivot connection 26 between the drive head 11 and the drive arm 13 is created by forming recess zones 27 in the side walls 18, 19 of the drive head 11. By this arrangement, it is possible to arrange the width of the head 11 to be substantially the same as for the arm 13, thereby providing an improved appearance for the assembly 10 as a whole. The recessed zones 27 conveniently each include a stop step portion 28 in an edge 29 of the zone. The stop step portion 28 is located adjacent to the top of the edge 29 so that it is located substantially at the corner between the side walls 18, 19 and the top wall 24 of the drive head. The stop step portion 28 is arranged to engage with a stop step portion 30 on the edge 31 of the flanges 14, 15 in the drive arm 13 so that the stop step portions 28, 30 together form a limiting stop to prevent the arm 13 pivoting about the pivot pin 20 from the position shown in Figures 4 and 5 in a clockwise direction beyond a limit or locked back position as shown in Figures 6 and 7. In the locked back position, the rear edge 22 of the top wall 23 of the drive arm 13 is maintained out of contact with the top wall 24 of the drive head 11. It is of course preferable that a limiting stop of the above described type be provided on both sides of the assembly but of course providing the limiting stop on one side only would also be functional.

In this manner an improved appearance is achieved for a wiper drive assembly and moreover, unsightly damage to the drive head is prevented.

It will be appreciated that whilst the flanges 14 and 15 are shown extending from the side walls of the drive arm 13 and are disposed about the narrower end portion of the drive head 11, this configuration could be reversed so that the flanges extend from the end of the drive head 11. The same type of stop step arrangement, but in reverse, can then be employed to ensure that the rear edge 22 of the top wall 23 of the drive arm 13 does not contact the top wall 24 of the drive head 11.

## Claims

1. A pivot connection between two pivotally linked members, being respectively a drive head (11) and a drive arm (13) of a wiper drive arm assembly linked by a pivot (20), said pivot connection comprising laterally disposed side wall portions (14) on one of said members arranged to be pivotally connected about inset sides (27) of the other of said members, each inset side terminating in a projecting edge (29,31) and stop means (28,30) acting between said members in one or both lateral side zones to limit relative pivoting movement between said members from an aligned condition to an extent such that an end edge (22) of a top wall (23) of said drive arm, located and extending between said laterally disposed side wall portions, does not contact a central zone of a top wall (24) of the drive head in a locked back position of the drive arm, characterised in that the stop means comprises a first stop step portion (28) located at the top of said projecting edge and a second stop step portion (30) located at the end of the top face (22) of said one member, the two stop step portions being located to either side of said pivot when the members are in said aligned condition.

2. A pivot connection according to Claim 1, wherein the side wall portions (14) are provided on said drive head (11) .

3. A wiper blade assembly comprising a drive head (11), a drive arm (13), wiper blade arrangement connected to said drive arm and a pivot connection according to Claim 1 or Claim 2, arranged between said drive head and said drive arm.

## Patentansprüche

1. Schwenkverbindung zwischen zwei schwenkbar aneinander angelenkten Elementen, wobei es sich um einen Antriebskopf (11) sowie einen Antriebsarm (13) einer Scheibenwischerantriebsarmanordnung handelt, die durch eine Schwenkverbindung (20) aneinander angelenkt sind, wobei die Schwenkverbindung seitlich angeordnete Seitenwandbereiche (14) eines der Elemente umfaßt, die schwenkbar aneinander anschließbar sind, um Einsatzseiten (27) des anderen der Elemente und jeder Einsatzseite in einer vorspringenden Kante (29, 31) ausläuft und eine Anschlageinrichtung (28, 30) zwischen den Elementen in einer oder beiden Seitenzonen wirkt, zur Begrenzung der relativen Schwenkbewegung zwischen den Elementen von einem ausgerichteten Zustand in einem solchen Ausmaß, daß eine Endkante (22) der oberen Wand (23) des Antriebsarmes, welcher sich zwischen den seitliche angeordneten Seitenwandbereichen befindet, nicht eine Mittelzone der oberen Wandung (24) des Antriebskopfes in einer verriegelten rückwärtigen Position des Antriebsarmes kontaktiert,
**dadurch gekennzeichnet,**
daß die Anschlageinrichtung einen ersten Anschlagstufenbereich (28) umfaßt, welcher sich oben an der vorspringenden Kante befindet und einen zweiten Anschlagstufenbereich (30), der sich am Ende der oberen Oberfläche (22) des einen Elementes befindet, wobei die beiden Anschlagstufenbereiche auf einer Seite der Schwenkverbindung angeordnet sind, wenn sich die Elemente in dem ausgerichteten Zustand befinden.

2. Schwenkverbindung nach Anspruch 1 wobei die Seitenwandbereiche (14) an dem Antriebskopf (11) vorgesehen sind.

3. Wischerblattanordnung mit einem Antriebskopf (11), einem Antriebsarm (13) einer Wischerblattanordnung, die an dem Wischerarm angeschlossen ist, sowie einer Schwenkverbindung gemäß Anspruch 1 oder Anspruch 2, die zwischen dem Antriebskopf und dem Antriebsarm angeordnet ist.

## Revendications

1. Connexion à pivot entre deux éléments liés de façon pivotante, étant respectivement une tête d'entraînement (11) et un bras d'entraînement (13) d'un ensemble de bras d'entraînement d'essuie-glace lié par un pivot (20), ladite connexion à pivot comprenant des parties de paroi latérale (14) disposées latéralement sur l'un desdits éléments disposés pour être connectés de façon pivotante autour de côtés insérés (27) de l'autre desdits éléments, chaque côté inséré se terminant suivant une bordure en saillie (29, 31) et un moyen d'arrêt (28, 30) agissant entre lesdits éléments dans l'une des ou les deux zones de côté latéral pour limiter un mouvement de pivotement relatif entre lesdits éléments d'un état aligné à une étendue telle qu'une bordure d'extrémité (22) d'une paroi supérieure (23) dudit bras d'entraînement, située et s'étendant entre lesdites parties de paroi latérale disposées latéralement, n'entre pas en contact avec une zone centrale d'une paroi supérieure (24) de la tête d'entraînement dans une position arrière verrouillée du bras d'entraînement, caractérisée par le fait que le moyen d'arrêt comprend une première partie d'étage d'arrêt(28) située à la partie supérieure de ladite bordure en saillie et une seconde partie d'étage d'arrêt (30) située à l'extrémité de la face supérieure (22) dudit premier élément précité, les deux parties d'étage d'arrêt étant situées de part et d'autre dudit pivot lorsque les éléments sont dans ledit état aligné.

2. Connexion à pivot selon la revendication 1, dans laquelle les parties de paroi latérale (14) sont disposées sur ladite tête d'entraînement (11).

3. Ensemble de lame d'essuie-glace comprenant une tête d'entraînement (11), un bras d'entraînement (13), un dispositif de lame d'essuie-glace connecté audit bras d'entraînement et une connexion à pivot telle que définie à la revendication 1 ou à la revendication 2, disposée entre ladite tête d'entraînement et ledit bras d'entraînement.
